# EUROPÄISCHE PATENTSCHRIFT

(11) **EP 2 583 881 B1**
(45) Veröffentlichungstag und Bekanntmachung des Hinweises auf die Patenterteilung: **16.07.2014**
(21) Anmeldenummer: 11001417.2
(22) Anmeldetag: 17.02.2011
(51) Int. Cl.: B62D 7/02, B66F 11/04, B60F 1/02, B62B 3/00, F16M 11/42, G03B 17/56

(54) **Lenkeinrichtung für einen Kamerawagen, und entsprechend ausgerüsteter Kamerawagen**
Steering device for a camera dolly and camera dolly with steering device
Dispositif de guidage pour un chariot de caméra et chariot de caméra ainsi équipé

(30) Priorität: 22.12.2009 DE 102009059272; 03.02.2010 DE 102010000285
(43) Veröffentlichungstag der Anmeldung: 24.04.2013
(73) Patentinhaber: Grip Factory Munich GmbH, 85386 Eching (DE)
(72) Erfinder: Tundo, Antonio, 85406 Zolling (DE)
(74) Vertreter: Meissner, Bolte & Partner GbR

(56) Entgegenhaltungen:
- DE-A1- 4 304 708
- DE-A1-102004 063 563
- GB-A- 2 134 461

## Beschreibung

Die Erfindung betrifft eine Lenkeinrichtung für einen Kamerawagen mit einem den Rädern, insbesondere den Vorder- und/oder Hinterrädern, desselben zugeordneten Lenkgetriebe und einer an dieses anschließbaren Lenkstange gemäß dem Oberbegriff des Anspruches 1. Weiterhin betrifft die Erfindung einen Kamerawagen mit einer derartigen Lenkeinrichtung.

Eine Lenkeinrichtung der genannten Art sowie ein entsprechender Kamerawagen sind beispielsweise aus der DE 10 2004 063 563 A1 bekannt. Dort ist ein Kamerawagen beschrieben, der in drei verschiedenen Lenkmodi betrieben werden kann, wobei unterschieden wird zwischen einem Modus, bei dem nur die Vorderräder paarweise nach links oder rechts lenkbar sind, einem Modus, bei dem nur die Hinterräder paarweise nach links oder rechts lenkbar sind, und einem Modus, bei dem alle Räder, also die Vorder- und Hinterräder gemeinsam, jeweils nach links oder rechts lenkbar sind. Bei dem letztgenannten Modus werden noch zwei Unter-Modi unterschieden, nämlich ein Modus, bei dem entweder die Vorder- und Hinterräder jeweils nach links oder rechts (crab-Modus) oder bei dem die Vorder- und Hinterräder jeweils entgegengesetzt nach links oder rechts (round-Modus), lenkbar sind. Konkret sind Vorderräder zur Lenkung derselben um jeweils vertikale Schwenkachsen mit einem Lenkgetriebe über eine zentrale Antriebskette koppelbar, während die Hinterräder zur Lenkung derselben um eine vertikale Schwenkachse mit dem Lenkgetriebe um eine oberhalb der zentralen Antriebskette angeordneten zweiten Antriebskette koppelbar sind. Insgesamt wird die Konstruktion zur Realisierung der verschiedenen Betriebsmodi als vergleichsweise aufwendig in der Herstellung und störanfällig empfunden.

Aus der DE 20 2007 003 500 U1 ist eine Konstruktion bekannt, nach der die verschiedenen Betriebsmodi mittels eines Umstecken eines Stiftes und einer Lenkstange realisiert werden. Das Umstecken der Lenkstange wird als vergleichsweise aufwendig und auch störend empfunden, insbesondere dann, wenn die Lenkstange mit am Kamerawagen angeschlossenen Peripheriegeräten, Sitzanordnungen und dergleichen kollidieren würde.

Des Weiteren offenbart Dokument DE 4 304 708 A1 die Präambel des Anspruchs 1.

Der Erfindung liegt die Aufgabe zugrunde, eine gegenüber dem Stand der Technik einfachere und leichter handhabbare Lenkeinrichtung für Kamerawagen, und einen entsprechend ausgerüsteten Kamerawagen zur Verfügung zu stellen, insbesondere einen Kamerawagen, bei dem der Lenkmodus auf einfache Art geändert werden kann.

Diese Aufgabe wird durch eine Lenkeinrichtung nach Patentanspruch 1 und/oder einen Kamerawagen nach Patentanspruch 12 gelost.

Insbesondere wird die Aufgabe durch eine Lenkeinrichtung für einen Kamerawagen mit einem den Rädern, Insbesondere den Vorder- und/oder Hinterrädern desselben zugeordneten Lenkgetriebe und einer an dieses anschließbaren Lenkstange, gelöst, wobei zumindest ein erstes Rad eine Schwenkeinrichtung aufweist, die mit der Lenkstange in Wirkverbindung bringbar ist und über die das erste und mittels einer Wirkübertragungsvorrichtung zumindest ein zweites Rad verschwenkbar ist bzw. sind, wobei mindestens eine Entkopplungsvorrichtung vorgesehen ist, um das erste Rad von der Schwenkeinrichtung zu entkoppeln derart, daß das zweite und gegebenenfalls weitere Räder in einem Zustand, in dem das erste Rad entkoppelt ist, durch die Schwenkeinrichtung des ersten Rades verschwenkbar bleibt bzw. bleiben. Insbesondere sind sämtliche Räder (Bodenlaufräder und/oder Schienenrader) über ein Getriebe, insbesondere Kettengetriebe, miteinander koppelbar, wobei alle Räder in gleicher Richtung verschwenkt werden können, aber auch jedes einzelne Rad entkoppelbar ist, so daß es frei verschwenkbar ist (beispielsweise bei einem Betrieb auf einer Schiene, bei dem vorzugsweise alle Schwenkachsen entkoppelt sind).

Ein Kerngedanke der Erfindung besteht darin, daß gekoppelte Räder über die Schwenkeinrichtung eines einzelnen (oder mehrerer) Räder verschwenkt werden können, auch wenn dieses selbst von der Schwenkeinrichtung entkoppelt ist. Die Lenkung bleibt dann im Prinzip an allen vier Rädern wirksam, egal, ob diese gekoppelt, entkoppelt oder beispielsweise in Geradeausstellung oder 45°- oder 135°-Stellung arretiert sind. Dadurch wird die Handhabung des Kamerawagens erheblich vereinfacht, insbesondere da ein Umstecken der Lenkstange nicht erforderlich ist. Die Lenkstange kann an einer bevorzugten Anschlussstelle bleiben. Weiterhin zeichnet sich die Konstruktion durch einen vergleichsweise geringen Konstruktionsaufwand aus.

Das erste Rad bzw. die ersten Räder können insbesondere die Vorderräder sein, das zweite Rad bzw. die zweiten Räder können insbesondere die Hinterräder sein (oder umgekehrt).

Vorzugsweise sind das erste und zweite Rad, insbesondere die Vorderräder und/oder die Hinterräder und/oder alle Räder, über die Wirkübertragungsvorrichtung, insbesondere ein Antriebsriemen, ein Kraftübertragungsgestänge oder eine Antriebskette und den Radschwenkachsen zugeordnete Kettenräder gemeinsam verschwenkbar. Eine derartige Ausführungsform ist konstruktiv vergleichsweise einfach. Wenn hier von Rädern die Rede ist, dann umfasst der Begriff "Rad" entweder ein Bodenlaufrad, ein Schienenlaufrad, ein Paar von gleichachsig gelagerten Bodenlaufrädern, ein Paar von hintereinander angeordneten Schienenlaufrädern oder ein Satz von Boden- und Schienenlaufrädern.

Weiter vorzugsweise ist eine Schwenkachse mindestens zweier, insbesondere aller Räder von diesen entkoppelbar. Dadurch kann die Entkopplung der Verschwenkung gezielt und vergleichsweise einfach erfolgen. Dementsprechend einfach ist eine Lenkmodus-Änderung des Kamerawagens.

In einer konkreten Ausführungsform ist mindestens eine Arretiervorrichtung vorgesehen, um zumindest eines der Räder, gegebenenfalls mehrere oder alle Räder gegenüber einem Fahrgestell des Kamerawagens zu arretieren. Insbesondere weist jedes Rad eine eigene Arretiervorrichtung auf. Alternativ können auch jeweils die Vorderräder bzw. jeweils die Hinterräder eine eigene Arretiervorrichtung aufweisen. Durch eine derartige Arretierung kann insbesondere der Betrieb des Kamerawagens auf einer Ebene (bzw. im Gelände bzw. nicht auf einer Schiene) vereinfacht werden. Der oben im Zusammenhang mit dem Stand der Technik beschriebene crab-Modus und round-Modus können einfach realisiert werden.

Vorzugsweise bleibt über die Schwenkeinrichtung des ersten Rades in einen Zustand, in dem dieses arretiert ist, mindestens ein weiteres Rad, insbesondere die Hinterräder, wenn das erste Rad ein Vorderrad ist, oder die Vorderräder, wenn das erste Rad ein Hinterrad ist, verschwenkbar. Durch eine derartige Ausführungsform hat auch die Arretierung nicht zur Folge, daß größere "Umbaumaßnahmen" erfolgen müssen, beispielsweise die Lenkstange umgesteckt werden muß. Die Handhabung des Kamerawagens bzw. dessen Lenkeinrichtung wird damit erheblich erleichtert.

Vorzugsweise umfaßt die Arretiervorrichtung mindestens einen insbesondere translatorisch verschieblichen Arretierstift, der in Eingriff mit mindestens einer Arretierausnehmung bringbar ist, wobei die Arretierausnehmung gegenüber dem Fahrgestell des Kamerawagens unverrückbar (ortsfest) ausgebildet ist. Im Prinzip können die Arretierausnehmungen direkt im/am Fahrgestell oder alternativ an einem separaten Element, das mit dem Fahrgestell über Befestigungsmittel wie beispielsweise Schrauben verbunden ist, angebracht sein. Eine derartige Konstruktion erleichtert das Arretieren jedes einzelnen Rades.

Vorzugsweise ist eine Vielzahl, insbesondere vier oder mindestens acht, von Arretierausnehmungen, insbesondere in einem Positionierelement, wie einer sich jeweils um eine Rad-Schwenkachse herum erstreckende Ringscheibe, ausgebildet. Das Positionierelement kann integraler Bestandteil des Fahrgestells oder an diesem als separates Bauteil ggf. lösbar befestigt sein. Konkret ist vorgesehen, die mehreren Ausnehmungen entlang einer Kreislinie um eine Rad-Schwenkachse herum insbesondere mit konstantem Winkelabstand voneinander anzuordnen, wobei beispielsweise bei acht Arretierausnehmungen diese einen jeweiligen Winkelabstand von 45° zueinander aufweisen. Dadurch ist eine vergleichsweise variable Arretierung möglich. Insbesondere sind ein crab-Mödus und/oder ein round-Modus einfach zu realisieren. Die Arretierausnehmungen sind vorzugsweise jeweils Aufnahmebohrungen für einen komplementären Arretierstift.

In einer konkreten Ausführungsform ist eine Nockenvorrichtung vorgesehen, um über Drehung einer Nocke den Arretierstift translatorisch, insbesondere etwa parallel zur Schwenkachse, zu bewegen. Eine derartige translatorische Verschiebung ist vergleichsweise einfach in der Handhabung und erfordert keine aufwendigen Maßnahmen hinsichtlich der Konstruktion.

In einer bevorzugten Ausführungsform weist die Entkopplungsvorrichtung ebenfalls einen vorzugsweise translatorisch, hier aber horizontal bzw. quer zur Schwenkachse verschieblichen Raststift auf, der in Eingriff mit mindestens einer, insbesondere einer von mindestens vier, vorzugsweise mindestens acht im gleichen Winkelabstand voneinander um die Schwenkachse des ersten Rades herum angeordneten Rastbohrungen bringbar ist. Die translatorische Verschiebung kann bei einer bevorzugten Ausführungsform durch Drehen des Raststiftes um seine Längsachse erfolgen, wobei eine entsprechende Anlaufschräge ausgebildet sein kann, die den Stift bei einer Verdrehung desselben translatorisch verschiebt. Eine derartige Kopplung/Entkopplung des jeweiligen Rades von der entsprechenden Schwenkachse ist vergleichsweise einfach durchzuführen und insbesondere einfach in der Konstruktion.

Vorteilhafterweise ist eine Verstelleinrichtung an mindestens einem Rad vorgesehen, die translatorisch verschiebbar und/oder verdrehbar ist derart, daß in Abhängigkeit von der Verschiebung/Verdrehung der Verstelleinrichtung mindestens ein Rad arretiert ist und/oder eine Wirkverbindung zwischen Schwenkachse des Rades und Schwenkeinrichtung hergestellt ist oder das Rad frei beweglich ist. Beispielsweise kann bei einer Nullposition der Verstelleinrichtung das Rad bzw. dessen Lenkstellung arretiert sein und zugleich eine Wirkverbindung von Schwenkachse des Rades und Schwenkeinrichtung hergestellt sein. Bei einer Verdrehung der Verstelleinrichtung um einen ersten Winkel, beispielsweise 90°, kann die Arretierung aufgehoben sein und gleichzeitig die Wirkverbindung zwischen Schwenkachse des Rades und Schwenkeinrichtung weiterhin aufrecht erhalten sein, wobei bei einer Drehung um einen zweiten Winkel, beispielsweise 180°, die Arretierung aufgehoben bleibt und das Rad z.B. für den Schienebetrieb frei verschwenkbar ist. In der Nullposition, bei der das Rad bzw. dessen Lenkstellung arretiert ist, wird durch eine insbesondere ausschließlich translatorische Bewegung der Verstelleinrichtung bei Aufrechterhalten der Arretierung die Wirkverbindung zwischen Schwenkachse des Rades und Schwenkeinrichtung aufgehoben. Um in diese Stellung zu gelangen, wird die Verstelleinrichtung bzw. der damit verbundene Raststift aus der der Schwenkachse zugeordneten Rastbohrung herausgezogen, insbesondere gegen die Wirkung einer Druckfeder und um 90° verdreht. Gleichzeitig mit dieser Verdrehung des Raststiftes wird auch die dem Arretierstift zugeordnete Nocke der Verstelleinrichtung um 90° gedreht, in der die Nocke den Arretierstift in eine vorbestimmte Arretierausnehmung am Rahmen des Kamerawagens drängt, und zwar ebenfalls gegen die Wirkung einer Druckfeder. In dieser Drehstellung kann der Raststift losgelassen werden. Er wird in dieser Stellung z.B. durch Anlage eines sich durch die Verstelleinrichtung hindurcherstreckenden Querbolzens an einer gegenüber der Ausgangs-Drehstellung, in der der Raststift in eine radiale Rastbohrung eingetaucht ist, relativ zur Schwenkachse des Rades von dieser weiter beabstandeten Stützfläche gehalten. In diesem Zustand ist das durch den Arretierstift blockierte Rad zwar nicht verschwenkbar, die übrigen Räder können jedoch weiterhin über die Schwenkeinrichtung verschwenkbar sein. Die Verstelleinrichtung umfaßt - wie bereits erwähnt - eine Nocke, um den Arretierstift zu verschieben (insbesondere in der Null-Position). Eine Verschiebung des Arretierstiftes kann einerseits über das Anlegen einer Zugkraft erfolgen, andererseits (gegebenenfalls auch alternativ oder zusätzlich) durch das Anlegen eines Drehmoments, wobei ggf. eine entsprechende Anlaufschräge ein Heraus- bzw. Hineinführen des Arretierstiftes aus der bzw. in die entsprechende Aufnahmebohrung zur Folge hat. Durch eine derartige Verstelleinrichtung können auf konstruktiv äußerst einfache Weise verschiedene Einstellungen vorgenommen werden. Die Handhabung ist ebenfalls vergleichsweise einfach.

Vorzugsweise ist eine Sicherungseinrichtung, insbesondere in Form eines sich in eine Umfangsnut der Schwenkachse hineinerstreckenden Sicherungsstiftes vorgesehen, um das Rad im entkoppelten Zustand an der Schwenkachse zu halten. Dadurch wird mit einfachen Maßnahmen die Zuverlässigkeit des Kamerawagens erhöht.

Die oben genannte Aufgabe wird auch durch einen Kamerawagen gelöst, der die Lenkeinrichtung der weiter oben beschriebenen Art aufweist. Hinsichtlich der Vorteile wird auf die beschriebene Lenkeinrichtung verwiesen.

Weitere Ausführungsformen und konstruktive Details ergeben sich aus den Unteransprüchen und deren Rückbezug auf vorangehende Ansprüche.

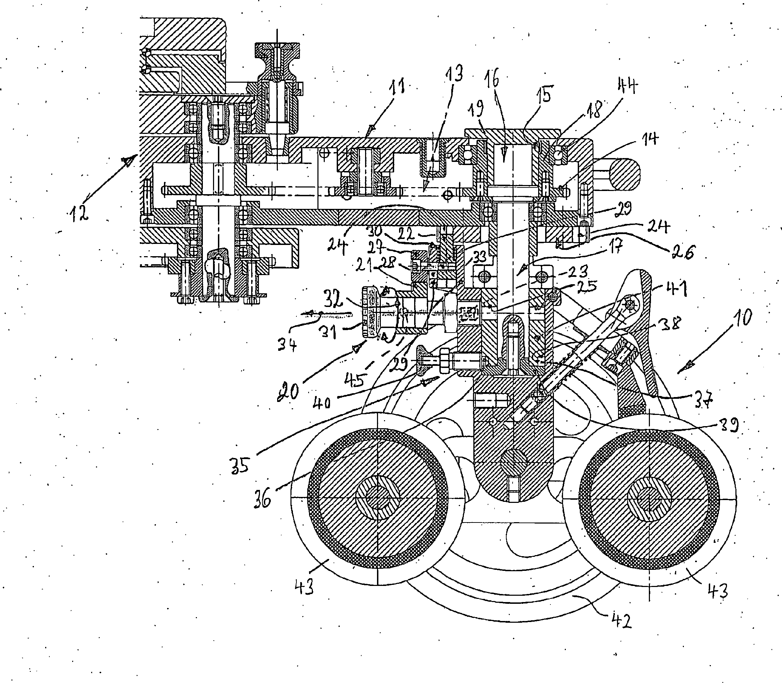

Nachfolgend wird die Erfindung hinsichtlich weiterer Merkmale und Vorteile anhand eines Ausführungsbeispiels beschrieben, das anhand der beigefügten Figur näher erläutert wird. Die einzige Figur zeigt eine Radanordnung eines Kamerawagens mit erfindungsgemäßer Lenkeinrichtung im Vertikalschnitt.

In der nachfolgenden Beschreibung werden für gleiche und gleich wirkende Teile dieselben Bezugsziffern verwendet.

Die Figur zeigt (ausschnittsweise) das Fahrgestell eines Kamerawagens mit zwei jeweils um Vertikalachsen 17 verschwenkbaren Vorderrädern und Hinterrädern, wobei nur eines der Räder mit der übergeordneten Bezugsziffer 10 gekennzeichnet ist. Die Vorder- und Hinterräder können jeweils als Doppelrad-Sätze ausgebildet sein, wobei zwischen zwei auf einer gemeinsamen Horizontalachse im Abstand voneinander angeordneten Bodenlaufrädern 42 jeweils zwei Schienenlaüfräder 43 in Fahrtrichtung hintereinander angeordnet sind. Die Laufräder drehen jeweils um horizontale Drehachsen. Die Radsätze befinden sich jeweils an den freien äußeren Enden von Schwenkarmen 11, die jeweils um vertikale Achsen am Fahrgestell verschwenkbar gelagert sind. Der Grundrahmen des Fahrgestells ist mit der Bezugsziffer 12 gekennzeichnet. Sämtliche vertikale Schwenk- und damit auch Lenkachsen der Vorder- und Hinterräder sind in an sich bekannter Weise, konkret im vorliegenden Fall über eine Antriebskette 13, die über Kettenräder 14 angetrieben und umgelenkt wird, getrieblich miteinander verbunden. Diese getriebliche Verbindung besteht auch zu einem Anschluß 15 an einem oberen Ende 16 jeder Rad-Schwenkachse 17.

An den Anschluß 15 ist eine (in der Figur nicht gezeigte) Lenkstange anschließbar. Der Anschluß 15 umfaßt insbesondere eine kugelgelagerte (Kugellager 44) Keilnutenbuchse 18, die in der Figur mit einer hülsenförmigen Abdeckhaube 19 abgedeckt ist. Dabei handelt es sich um eine an sich bekannte Konstruktion.

Zur Herstellung einer Arretierung des Rades 10 bzw. dessen Lenkstellung und zur Herstellung einer Wirkverbindung zwischen Rad 10 und Rad-Schwenkachse 17 ist eine Verstelleinrichtung 20 vorgesehen. In der Figur befindet sich die Verstelleinrichtung 20 in einer ersten Einstellung, auch "Nullposition" genannt. Die Verstelleinrichtung 20 umfaßt eine Verstellnocke 21, einen parallel zur Rad-Schwenkachse 17 verschieblich gelagerten Arretierstift 22 und einen horizontal bzw. quer zur Rad-Schwenkachse 17 verschieblich gelagerten Raststift 23. Gemäß der Figur befindet sich der Arretierstift 22 in einer Arretierausnehmung 24 (bzw. -bohrung), ebenso wie der Raststift 23 außerhalb einer sich radial erstreckenden Rastbohrung 25, die wiederum vorzugsweise in einer Hülse 41 angeordnet ist. Die Rastbohrung 25 ist innerhalb einer um die Schwenkachse 17 herum angeordneten und mit dieser drehfest verbundenen Buchse oder Hülse 41 ausgebildet. Die Arretierausnehmung 24 ist innerhalb einer Ringscheibe 26 vorgesehen, die am Fahrgestell bzw. Schwenkarm 11 befestigt ist. Die Arretierausnehmung 24 erstreckt sich in der Figur vertikal bzw. etwa parallel zur Schwenkachse 17. Die Ringscheibe 26 erstreckt sich um die Schwenkachse 17 herum, und zwar an der Unterseite des Schwenkarms 11.

Insgesamt sind acht Arretierausnehmungen 24 und acht Rastbohrungen 25 vorgesehen (von denen jeweils nur zwei diametral zur Schwenkachse 17 angeordnete in der Figur zu sehen sind). Die Arretierausnehmungen 24 und Rastbohrungen 25 weisen jeweils einen Winkelabstand von (etwa) 45° auf, wobei auch andere Winkelabstände möglich sind.

Die Verstellnocke 21 steht konkret in Kontakt mit einem Stiftlagerelement 27, in dem ein Haltestift 28 gelagert ist, der sich in der Figur etwa horizontal erstreckt und an dessen inneren Endabschnitt 29 mit dem Arretierstift 22 in Kontakt steht. Die Verstellnocke 21 drückt in der Position gemäß der Figur über das Stiftlagerelement 27 und den Haltestift 28 bzw. dessen Endabschnitt 29 den Arretierstift 22 nach oben in eine der acht Arretierausnehmungen 24 hinein. Der entsprechenden Druckkraft wirkt ein Federelement 30 in Form einer Schraubendruckfeder entgegen, das in der Position gemäß der Figur zusammengedrückt ist.

Die Verstelleinrichtung 20 weist noch einen Steuerknopf 31 auf, mit dem die Verstellnocke 21 um eine horizontale Achse verdreht werden kann (siehe Doppelpfeil 32). Dadurch läßt sich der Haltestift 28 samt Arretierstift 22 gegen die Wirkung des Federelements 30 auf- und abbewegen und somit der Arretierstift 22 in die Arretierausnehmung 24 hinein oder aus dieser herausbewegen.

Wie bereits oben erwähnt, zeigt die anliegende Figur die sogenannte "Nullposition" der Verstelleinrichtung 20. In dieser Position ist das Rad 10 bzw. dessen Lenkstellung gesperrt. Das Rad 10 läßt sich also nicht um die vertikale Schwenkachse 17 drehen. Andererseits kann jedoch ein Lenker bzw. eine Lenkstange, die in die Keilnutenbuchse 18 in an sich bekannter Weise gesteckt ist, gedreht werden, da sich die die radialen Rastbohrungen 25 aufweisende Hülse 41 zusammen mit der zugeordneten Schwenkachse 17 frei drehen läßt. Die Hülse 41 und damit auch die Schwenkachse 17 sind durch den Rastbolzen bzw. Raststift 23 nicht blockiert. Der Raststift 23 befindet sich außerhalb der Rastbohrung 25, wie in der anliegenden Figur gestrichelt angedeutet.

Die Lenkstellung des Rades 10 ist durch den Arretierstift 22 festgelegt. Der Arretierstift 22 ist zu diesem Zweck in eine der vier oder vorzugsweise acht gleichmäßig über den Umfang der Schwenkachse 17 verteilt angeordneten Arretierausnehmungen 24 gedrängt, und zwar durch die Verstellnocke 21 entgegen der Wirkung des Federelements 30. Die Verstellnocke 21 läßt sich in diese Stellung nur dann drehen, wenn sie zusammen mit dem Rastbolzen bzw. Raststift 23 aus einer der der Schwenkachse 17 zugeordneten Rastbohrungen 25 herausgezogen ist, und zwar in Richtung des Pfeiles 34. Damit wird die Schwenkachse 17 innerhalb der Schwenkachsenaufnahme frei drehbar. Die Verstelleinrichtung wird in der in der Figur dargestellten herausgezogenen und mit der Verstellnocke 21 nach oben gerichteten Position durch einen sich durch die Verstelleinrichtung hindurcherstreckenden Querbolzen 45 gehalten. Dieser stützt sich in der dargestellten Drehstellung der Verstelleinrichtung 20 an einer gegenüber der Ausgangs-Drehstellung, in der der Raststift 23 in eine radiale Rastbohrung 25 eingetaucht ist, relativ zur Schwenkachse des Rades 10 von dieser weiter beabstandeten Stützfläche ab. In der "Nullposition" ist das Rad 10 in einer relativ zum Rahmen 12 des Kamerawagen festen Lenkstellung arretiert. Das Rad 10 kann sich nicht um die Schwenkachse 17 drehen. Da die Schwenkachse 17 jedoch vom Rad 10 entkoppelt ist, bleibt das der Schwenkachse 17 zugeordnete Kettenrad 14 zusammen mit der Schwenkachse 17 drehbar mit der Folge, daß die übrigen Räder von der Blockierung des in der Figur dargestellten Rades 10 unbeeinflußt sind.

Wenn die Verstelleinrichtung 20 bzw. deren Steuerknopf 31 aus der in der Figur dargestellten Position um 90° nach links oder nach rechts verdreht wird, kann sich der Arretierstift 22 unter dem Einfluß des Federelements 30 aus der zugeordneten Arretierausnehmung 24 herausbewegen. Das Rad 10 wird dadurch wieder entriegelt und läßt sich relativ zum Rahmen 12 des Kamerawagens verschwenken. Gleichzeitig läßt sich dann die Verstelleinrichtung 20 samt Rastbolzen bzw. Raststift 23 wieder radial nach innen, d.h. zur Schwenkachse 17 hin bewegen, und zwar mit Unterstützung einer in der Figur nicht dargestellten Druckfeder. Dadurch läßt sich der Raststift 23 in eine der Rastbohrungen 25 einrasten. Dadurch entsteht eine formschlüssige Verbindung zwischen Schwenkachse 17 und Rad 10, und dieses ist wieder verschwenkbar bzw. lenkbar.

Wenn die Verstelleinrichtung 20 samt Steuerknopf 31 noch weiter um 90° in eine relativ zu der in der Figur dargestellten Position 180°-Stellung gedreht wird, in der sich dann der Rastbolzen bzw. Raststift 23 wieder außerhalb einer der in der Hülse 41 angeordneten Rastbohrungen 25 befindet, ist das Rad 10 vollständig entkoppelt. Es kann sich also um die mit der Schwenkachse 17 fest verbundene Hülse 41, die die Rastbohrungen 25 umfaßt, frei drehen. Das Rad ist sowohl von der Schwenkachse 17 als auch von den Arretierausnehmungen 24 entkoppelt. Die Verstelleinrichtung 20. samt Steuerknopf 31 wird in der vorgenannten Position in gleicher Weise gehalten wie in der in der Figur dargestellten Position. Nur ist die Verstellnocke 21 dann nach unten gerichtet und nicht nach oben, so wie in der anliegenden Figur dargestellt.

In dieser Stellung wird das Rad 10 durch eine Sicherungseinrichtung 35 am Rahmen des Kamerawagens bzw. an dem jeweils zugeordneten Schwenkarm 11 gehalten. Diese Sicherungseinrichtung 35 umfaßt einen sich quer zur Schwenkachse 17 erstreckenden Sicherungsstift 36, der sich in eine der Schwenkachse 17 zugeordnete Umfangsnut 37 hineinerstreckt. Diese Umfangsnut 37 wird durch eine am unteren Ende der Hülse 41 ausgebildete Kantenausnehmung 38 einerseits und durch eine an der unteren Stirnseite der Schwenkachse 17 angeordnete Begrenzungsscheibe 39 andererseits begrenzt. Durch die vorgenannte Sicherungseinrichtung 35 wird das Rad 10, insbesondere auch im vollständig entkoppelten Zustand an der Schwenkachse 17 und damit auch am Kamerawagen gehalten. Die Sicherungseinrichtung 35 umfaßt noch ein Betätigungselement 40, mit dem beispielsweise gegen die Wirkung einer nicht dargestellten Druckfeder eine Zugkraft ausgeübt werden kann, um den Sicherungsstift 36 aus der Umfangsnut 37 heraus zu ziehen. Damit läßt sich das Rad 10 dann von der Schwenkachse 17 abziehen und entfernen.

Die entsprechende Translationsbewegung des Sicherungsstiftes 36 läßt sich auch durch Verdrehen des Betätigungselements 40 erreichen, sofern dadurch eine Zusammenwirkung von Anlaufschrägen erfolgt. Gleiches gilt auch für die Verstelleinrichtung 20.

Ergänzend zu dem bereits vorstehend erläuterten Arretierstift 22 sei noch erwähnt, daß der diesem zugeordnete Haltestift 28 innerhalb eines sich vertikal erstreckenden Langlochs 33 geführt ist. Das Langloch 33 ist Teil der Vertikallagerung 29 des Arretierstiftes 22.

Dank der beschriebenen vier verschiedenen Positionen der Verstelleinrichtung 20 kann jedes Rad 10 auf besonders einfache Weise in vierfacher Hinsicht eingestellt werden. Erstens kann das Rad 10 arretiert sein, ohne daß die Wirkverbindung zwischen Schwenkachse 17 und der Wirkübertragungsvorrichtung, insbesondere der Antriebskette 13 aufgehoben wird. Diese sogenannte "Nullposition", ist in der anliegenden Figur dargestellt. Zweitens kann das Rad 10 gegenüber dem Fahrgestell schwenkbar sein, wobei zugleich eine Wirkverbindung zwischen Schwenkachse 17 und Rad 10 besteht. Dann ist das Rad 10 schwenk- bzw. lenkbar. Drittens kann das Rad 10 gegenüber dem Fahrgestell einerseits und gegenüber der Schwenkachse 17 andererseits entkoppelt sein. Das Rad 10 ist dann frei schwenkbar. Diese Position ist für den Schienenbetrieb von Bedeutung. Dabei sei noch erwähnt, daß die zweite und vierte Position der Verstelleinrichtung, nämlich die 90°- und 270°-Stellung hinsichtlich des Betriebsmodus identisch sind.

Der Kern der erfindungsgemäßen und beschriebenen Radschalt-Konstruktion ist, daß anders als bei den Konstruktionen gemäß dem Stand der Technik von jedem Schwenkarm 11 aus der Kamerawagen gelenkt werden kann. Eine Lenkstange muß nicht umgesteckt werden, und zwar insbesondere dann nicht, wenn der Lenkmodus verändert wird. Eine sogenannte crab-Lenkung, bei der alle Räder 10 in die gleiche Richtung verschwenkbar sind, ist an jedem Schwenkarm, an dem sich ein Rad 10 befindet, möglich, wenn die Verstelleinrichtung 20 bzw. Verstellnocke 21 auf die 90°- bzw. 270°-Stellung geschaltet ist.

Vorder- bzw. Hinterradlenkung ist im Gegensatz zu herkömmlichen Kamerawagen ebenfalls von jedem Schwenkarm 11 realisierbar. Dies geschieht dadurch, daß man die Verstelleinrichtung entweder der Hinter- oder der Vorderräder in die sogenannte "Nullposition" bringt.

Die erfindungsgemäße Konstruktion zeichnet sich also durch eine äußerst hohe Variabilität und einfache Bedienung aus. Ein Umstecken der Lenkstange ist auf keinen Fall erforderlich.

Es sei an dieser Stelle nochmals darauf hingewiesen, daß der Begriff "Rad" auch einen Radsatz aus zwei Bodenlaufrädern und zwei dazwischen angeordneten Schienenlaufrädern, so wie dies in der einzigen Figur dargestellt ist, umfaßt.

Sämtliche in den Anmeldungsunterlagen offenbarten Merkmale werden als erfindungswesentlich beansprucht, soweit sie einzelne oder in Kombination gegenüber dem Stand der Technik neu sind.

### Bezugszeichenliste

- 10: Rad
- 11: Schwenkarm
- 12: Grundrahmen
- 13: Antriebsketten
- 14: Kettenrad
- 15: Anschluß
- 16: proximales Ende
- 17: Schwenkachse
- 18: Keilnutenbuchse
- 19: Abdeckhaube
- 20: Verstelleinrichtung
- 21: Verstellnocke
- 22: Arretierstift
- 23: Raststift
- 24: Arretierausnehmung
- 25: Rastbohrung
- 26: Positionierscheibe
- 27: Stiftlagerelement
- 28: Haltestift
- 29: Vertikallagerung des Arretierstiftes 22
- 30: Federelement
- 31: Steuerknopf
- 32: Doppelpfeil
- 33: Langloch
- 34: Pfeil
- 35: Sicherungseinrichtung
- 36: Sicherungsstift
- 37: Umfangsnut
- 38: Kantenausnehmung
- 39: stirnseitige Begrenzung
- 40: Betätigungselement
- 41: Hülse mit radialen Rastbohrungen 25
- 42: Bodenlaufrad
- 43: Schienenlaufrad
- 44: Kugellager
- 45: Querbolzen

## Patentansprüche

1. Lenkeinrichtung für einen Kamerawagen mit einem den Rädern (10), insbesondere den Vorder- und/oder Hinterrädern, desselben zugeordneten Lenkgetriebe und einer an dieses anschließbaren Lenkstange, wobei zumindest ein erstes Rad (10) eine Schwenkeinrichtung (13, 14, 18) aufweist, die mit der Lenkstange in Wirkverbindung bringbar ist und über die das erste und mittels einer Wirkubertragungsvorrichtung zumindest ein zweites Rad (10) verschwenkbar (Schwenkachse 17) ist bzw. sind,
wobei
mindestens eine Entkopplungsvorrichtung (23, 25) vorgesehen ist, um das erste Rad (10) von der Schwenkeinrichtung (13, 14, 18) zu entkoppeln **dadurch gekennzeichnet, daß** das zweite und gegebenenfalls weitere Räder (10) in einem Zustand, in dem das erste Rad (10) entkoppelt ist, durch die Schwenkeinrichtung (13, 14, 18) des ersten Rades (10) verschwenkbar bleibt bzw. bleiben.

2. Lenkeinrichtung nach Anspruch 1,
**dadurch gekennzeichnet, daß**
das erste und zweite Rad (10), insbesondere die Vorderräder und/oder die Hinterräder und/der alle Rader über die Wirkübertragungsvorrichtung, insbesondere einen Antriebsriemen oder eine Antriebskette (13) und den Schwenkachsen (17) der Räder (10) zugeordnete Kettenräder (14) gemeinsam verschwenkbar sind.

3. Lenkeinrichtung nach Anspruch 2,
**dadurch gekennzeichnet, daß**
eine Schwenkachse (17) mindestens zweier, insbesondere aller Räder von diesen entkoppelbar ist.

4. Lenkeinrichtung nach einem der Ansprüche 1 bis 3,
**dadurch gekennzeichnet, daß**
mindestens eine Arretiervorrichtung (22, 24) vorgesehen ist, um zumindest ein Rad (10), gegebenenfalls mehrere oder alle Räder, gegenüber einem Fahrgestell des Kamerawagens in einer vorbestimmten Schwenk- bzw. Lenkstellung zu arretieren.

5. Lenkeinrichtung nach Anspruch 4,
**dadurch gekennzeichnet, daß**
über die Schwenkeinrichtung (13, 14, 18) des ersten Rades (10) in einem Zustand, in dem dieses arretiert ist, mindestens ein weiteres Rad (10), insbesondere die Hinterräder, wenn das erste Rad (10) ein Vorderrad ist, oder die Vorderräder, wenn das erste Rad (10) ein Hinterrad ist, verschwenkbar bleibt.

6. Lenkeinrichtung nach Anspruch 4 oder 5,
**dadurch gekennzeichnet, daß**
die Arretiervorrichtung mindestens einen, insbesondere translatorisch (vertikal) verschieblichen Arretierstift (22) umfaßt, der in Eingriff mit mindestens einer Arretierausnehmung (24) bringbar ist, wobei die Arretierausnehmung (24) ortsfest gegenüber dem Fahrgestell des Kamerawagens ausgebildet ist.

7. Lenkeinrichtung nach Anspruch 6,
**dadurch gekennzeichnet, daß**
eine Vielzahl, insbesondere vier oder vorzugsweise acht, von Arretierausnehmungen (24), insbesondere in einem Positionierelement, wie einer sich jeweils um eine Schwenkachse (17) herum erstreckende Ringscheibe (26), ausgebildet ist.

8. Lenkeinrichtung nach einem der Ansprüche 6 oder 7,
**dadurch gekennzeichnet, daß**
eine Verstelleinrichtung (20) vorgesehen ist, die eine Verstellnocke (21) umfasst, derart, dass durch Verdrehung derselben der Arretierstift (22) translatorisch bewegbar ist.

9. Lenkeinrichtung nach einem der vorhergehenden Ansprüche,
**dadurch gekennzeichnet, daß**
die Entkopplungsvorrichtung (23, 25) einen insbesondere translatorisch (horizontal bzw. quer zur Schwenkachse 17) verschieblichen Raststift (23) umfaßt, der in Eingriff mit mindestens einer, insbesondere einer von mindestens vier, vorzugsweise mindestens acht im gleichen Winkelabstand voneinander um die Schwenkachse (17) des ersten Rades (10) herum angeordneten Rastbohrungen (25) bringbar ist.

10. Lenkeinrichtung nach einem der Ansprüche 5 bis 8 und Anspruch 9,
**dadurch gekennzeichnet, daß**
die Verstelleinrichtung (20) an mindestens einem Rad (10) vorgesehen ist, die translatorisch verschiebbar und/oder verdrehbar ist derart, daß in Abhängigkeit von der Verschiebung/Verdrehung der Verstelleinrichtung (20) mindestens ein Rad (10) arretiert ist, und/oder eine Wirkverbindung zwischen Schwenkachse (17) des Rades (10) und dem Rad (10) hergestellt, oder das Rad (10) um die Schwenkachse (17) frei beweglich bzw. frei schwenkbar ist.

11. Lenkeinrichtung nach einem der vorhergehenden Ansprüche,
**dadurch gekennzeichnet, daß**
eine Sicherungseinrichtung, insbesondere in Form eines sich in eine Umfangsnut (37) der Schwenkachse (17) hineinerstreckender Sicherungsstiftes (36) vorgesehen ist, um das Rad (10) auch im entkoppelten Zustand an der Schwenkachse (17) zu halten.

12. Kamerawagen mit einer Lenkeinrichtung nach einem der Ansprüche 1 bis 11. -

## Claims

1. A steering mechanism for a camera dolly with a steering gear associated with the wheels (10), especially the front and/or rear wheels of the same, and a steering rod capable of being connected to the steering gear, wherein at least one first wheel (10) provides a swivelling mechanism (13, 14, 18), which can be brought into active connection with the steering rod and by means of which the first and, by means of an active transmission device, at least one second wheel (10) is, or respectively are, capable of being swivelled (swivelling axle 17),
wherein at least one decoupling device (23, 25) is provided in order to decouple the first wheel (10) from the swivelling mechanism (13, 14, 18),
**characterised in that**,
in a condition in which the first wheel (10) is decoupled, the second, and optionally further wheels (10) remains, or respectively remain, capable of being swivelled by the swivelling mechanism (13, 14, 18) of the first wheel (10).

2. The steering mechanism according to claim 1,
**characterised in that**
the first and second wheel (10), especially the front wheels and/or the rear wheels and/or all of the wheels, can be swivelled together via the active transmission device, especially a drive belt or drive chain (13), and chain wheels (14) associated with the swivelling axles (17) of the wheels (10).

3. The steering mechanism according to claim 2,
**characterised in that**
a swivelling axle (17) of at least two, especially of all wheels, can be decoupled from the latter.

4. The steering mechanism according to any one of claims 1 to 3,
**characterised in that**
at least one locking device (22, 24) is provided in order to lock at least one wheel (10), optionally several or all wheels, relative to a chassis of the camera dolly in a predetermined swivelling, or respectively steering, position.

5. The steering mechanism according to claim 4,
**characterised in that**,
via the swivelling mechanism (13, 14, 18) of the first wheel (10), in a condition in which the latter is locked, at least one further wheel (10), especially the rear wheels, if the first wheel (10) is a front wheel, or the front wheels, if the first wheel (10) is a rear wheel, remains capable of being swivelled.

6. The steering mechanism according to claim 4 or 5,
**characterised in that**
the locking device comprises at least one, especially translationally (vertically) displaceable, locking pin (22) which can be brought into engagement with at least one locking recess (24), wherein the locking recess (24) is embodied in a positionally rigid manner relative to the chassis of the camera dolly.

7. The steering mechanism according to claim 6,
**characterised in that**
a plurality of locking recesses (24), especially four or preferably eight, are embodied, especially in a positioning element, as an annular disc (26) extending in each case around a swivelling axle (17).

8. The steering mechanism according to any one of claims 6 or 7,
**characterised in that**
an adjustment device (20) which comprises an adjustment cam (21) is provided in such a manner that by rotating the same, the locking pin (22) can be moved in a translational manner.

9. The steering mechanism according to any one of the preceding claims,
**characterised in that**
the decoupling device (23, 25) comprises a latch pin (23), especially displaceable in a translational manner (horizontally or respectively transversely to the swivelling axle 17), which can be brought into engagement with at least one, especially one of at least four, preferably at least eight, latch boreholes (25) arranged at the same angular spacing from one another around the swivelling axle (17) of the first wheel (10).

10. The steering mechanism according to any one of claims 5 to 8 and claim 9,
**characterised in that**
the adjustment device (20) is provided on at least one wheel (10), which is displaceable and/or rotatable in a translational manner such that, dependent upon the displacement/rotation of the adjustment device (20), at least one wheel (10) is locked, and/or an active connection is manufactured between swivelling axle (17) of the wheel (10) and the wheel (10), or the wheel (10) can be freely moved, or respectively freely swivelled, about the swivelling axle (17).

11. The steering mechanism according to any one of the preceding claims,
**characterised in that**
a securing device, especially in the form of a securing pin (36) extending into a peripheral groove (37) of the swivelling axle (17) is provided in order to hold the wheel (10) on the swivelling axle (17) even in the decoupled condition.

12. A camera dolly with a steering mechanism according to any one of claims 1 to 11.

## Revendications

1. Dispositif de guidage pour un chariot de caméra équipé d'un mécanisme de direction associé aux roues (10) de celui-ci, en particulier aux roues avant et/ou aux roues arrière, et une bielle de direction pouvant être raccordée audit mécanisme de direction, au moins une première roue (10) au moins présentant un dispositif de pivotement (13, 14, 18) qui peut être amené en liaison fonctionnelle avec la bielle de direction et par l'intermédiaire duquel la première et, au moyen d'un système de transmission actif, au moins une deuxième roue (10) peut ou peuvent pivoter (axe de pivotement 17),
au moins un système de découplage (23, 25) étant prévu pour découpler la première roue (10) du dispositif de pivotement (13, 14, 18), **caractérisé en ce que** la deuxième roue et éventuellement des roues supplémentaires (10) peuvent continuer à pivoter grâce au dispositif de pivotement (13, 14, 18) de la première roue (10) dans un état, dans lequel la première roue (10) est découplée.

2. Dispositif de direction selon la revendication 1,
**caractérisé en ce que**
la première roue et la deuxième roue (10), en particulier les roues avant et/ou les roues arrière, et/ou toutes les roues peuvent pivoter conjointement par l'intermédiaire du système de transmission actif, en particulier par l'intermédiaire d'une courroie d'entraînement ou d'une chaîne d'entraînement (13) et de roues de chaîne (14) associées aux axes de pivotement (17) des roues (10).

3. Dispositif de direction selon la revendication 2,
**caractérisé en ce**
**qu'**un axe de pivotement (17) d'au moins deux roues, en particulier de toutes les roues, peut être découplé de ces dernières.

4. Dispositif de direction selon l'une quelconque des revendications 1 à 3,
**caractérisé en ce**
**qu'**au moins un système de blocage (22, 24) est prévu pour bloquer au moins une roue (10), éventuellement plusieurs ou toutes les roues, par rapport à un châssis du chariot de caméra, dans une position de pivotement ou de direction prédéterminée.

5. Dispositif de direction selon la revendication 4,
**caractérisé en ce**
**qu'**au moins une autre roue (10), en particulier les roues arrière lorsque la première roue (10) est une roue avant, ou les roues avant lorsque la première roue (10) est une roue arrière, peut toujours être pivotée par l'intermédiaire du dispositif de pivotement (13, 14, 18) de la première roue (10) dans un état, dans lequel ladite roue est bloquée.

6. Dispositif de direction selon la revendication 4 ou 5,
**caractérisé en ce**
**que** le système de blocage comprend au moins une goupille de blocage (22) pouvant être déplacée par coulissement, en particulier par translation (verticalement), laquelle goupille de blocage peut être amenée en prise avec au moins un évidement de blocage (24), sachant que l'évidement de blocage (24) est réalisé de manière stationnaire par rapport au châssis du chariot de caméra.

7. Dispositif de direction selon la revendication 6,
**caractérisé en ce**
**qu'**une pluralité d'évidements de blocage (24), en particulier quatre ou de préférence huit évidements de blocage, est réalisée en particulier dans un élément de positionnement, tel qu'une rondelle (26) s'étendant respectivement autour d'un axe de pivotement (17).

8. Dispositif de direction selon l'une quelconque des revendications 6 ou 7,
**caractérisé en ce**
**qu'**un dispositif de réglage (20) est prévu, lequel comprend une came de réglage (21) de telle manière que la rotation de ladite came de réglage permet de déplacer par translation ladite goupille de blocage (22).

9. Dispositif de direction selon l'une quelconque des revendications précédentes,
**caractérisé en ce**
**que** le système de découplage (23, 25) comprend une goupille d'enclenchement (23) pouvant être déplacée par coulissement, en particulier par translation (de manière horizontale ou de manière transversale par rapport à l'axe de pivotement 17), laquelle goupille d'enclenchement peut être amenée en prise avec au moins un, en particulier un d'au moins quatre, de préférence d'au moins huit alésages d'enclenchement (25) disposés les uns par rapport aux autres selon une distance angulaire égale tout autour de l'axe de pivotement (17) de la première roue (10).

10. Dispositif de guidage selon l'une quelconque des revendications 5 à 8, et la revendication 9,
**caractérisé en ce que**
le dispositif de réglage (20) est prévu au niveau au moins d'une roue (10), qui, par translation, peut être déplacée par coulissement et/ou tournée de telle manière qu'en fonction du déplacement par coulissement et/ou de la rotation du dispositif de déplacement (20)au moins une roue (10) est bloquée, et/ou une liaison fonctionnelle entre l'axe de pivotement (17) de la roue (10) et la roue (10) est établie, ou la roue (10) peut se mouvoir ou pivoter librement autour de l'axe de pivotement (17).

11. Dispositif de direction selon l'une quelconque des revendications précédentes,
**caractérisé en ce**
**qu'**est prévu un dispositif de sécurité, en particulier sous la forme d'une goupille de sécurité (36) s'étendant à l'intérieur d'une rainure périphérique (37) de l'axe de pivotement (17) afin de maintenir la roue (10) également dans l'état découplé au niveau de l'axe de pivotement (17).

12. Chariot de caméra équipé d'un dispositif de direction selon l'une quelconque des revendications 1 à 11.
